(19)

Europäisches
Patentamt
European
Patent Office
Office européen
des brevets

(11) **EP 2 262 272 B1**

(12) **EUROPEAN PATENT SPECIFICATION**

(45) Date of publication and mention
of the grant of the patent:
**28.02.2018 Bulletin 2018/09**

(51) Int Cl.:
**G09G 3/34** *(2006.01)*          **G09G 3/36** *(2006.01)*
**G09G 3/00** *(2006.01)*          **H04N 13/00** *(2018.01)*

(21) Application number: **10164616.4**

(22) Date of filing: **01.06.2010**

(54) **Control of a multi-view display system using shutter glasses**

Steuerung eines Anzeigesystem mit mehreren Ansichten unter Verwendung von Shutterbrillen

Contrôle d'un système d'affichage multi-vues utilisant des lunettes à obturateurs

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **09.06.2009 JP 2009138427**

(43) Date of publication of application:
**15.12.2010 Bulletin 2010/50**

(73) Proprietor: **Saturn Licensing LLC
New York, NY 10022-3211 (US)**

(72) Inventors:
• **Nakagawa, Makoto
TOKYO (JP)**

• **Kamada, Tsuyoshi
TOKYO (JP)**
• **Nakahata, Yuji
TOKYO (JP)**

(74) Representative: **Delumeau, François Guy et al
Cabinet Beau de Loménie
158, rue de l'Université
75340 Paris Cedex 07 (FR)**

(56) References cited:
**WO-A1-2006/123706      WO-A1-2007/072598
US-A1- 2005 259 064      US-A1- 2009 122 087**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present invention relates to an image display system using shutter eyeglasses, and an image display device suitably used in the image display system.

In recent years, an active matrix type Liquid Crystal Display (LCD) device in which a Thin Film Transistor (TFT) is provided every pixel has been commonly used as a display device for a flat-screen television and mobile terminal equipment. In general, in such a liquid crystal display device, a video signal is written from an upper portion to a lower portion of a screen in a line-sequential manner, thereby driving the pixels.

Now, in the liquid crystal display device, the following drive is carried out in accordance with a use application. Specifically, one frame period of time is divided into multiple periods of time, and different images are displayed so as to correspond to the multiple periods of time obtained through the division. This drive will be hereinafter referred to as "time division drive." A liquid crystal display device using a field sequential system, a stereoscopic image display system using shutter eyeglasses (disclosed in Japanese Patent Laid-Open No. 2000-4451 as Patent Document 1, hereinafter) or the like, for example, is given as a liquid crystal display device using such a time division driving system.

In the stereoscopic image display system using the shutter eyeglasses, one frame period of time is divided into two periods of time, and two sheets of images mutually having a parallax are switched over to each other to be displayed as an image for a left-hand side eye, and an image for a right-hand side eye. In addition, the shutter eyeglasses are used in which an opening/closing operation is carried out synchronously with the display switching. The shutter eyeglasses are controlled in such a way that a portion for the left-hand side eye is opened (a portion for the right-hand side eye is closed) for a period of display time of the image for the left-hand side eye, and the portion for the right-hand side eye is opened (the portion for the left-hand side eye is closed) for a period of display time of the image for the right-hand side eye. An observer observes the displayed image with the shutter eyeglasses plonked on his/her nose, thereby making it possible to realize the stereoscopic viewing.

US 2009/122087 describes a display panel driving technique which tackles moving image blur by first setting a "lighting ratio" (the fraction of time within each frame period that the screen is lit by a backlight) and then setting the "phase" (i.e. the time interval between driving a given row in the display and switching on the backlight) based on the set lighting ratio.

US 2005/259064 describes a technique for tackling blur and stroboscopic effects in a liquid crystal display by setting the fraction of time within each frame that the screen is lit by a backlight, dependent on the type of the content to be displayed (sport, drama, news, etc.).

WO2007/072598 describes a liquid crystal display having a backlight divided into a matrix of component elements. At screen locations corresponding to the different backlight elements a determination is made whether or not there is motion in the displayed video. If motion is detected then the corresponding backlight element is operated in a blinking manner whereas if no motion is detected then the relevant backlight component is illuminated throughout the frame period.

WO2006/123706 describes a technique similar to the latter, but relating to a liquid crystal display having a backlight formed of linear strips. The fraction of time each backlight strip is lit during the frame period depends inversely on the amount of motion that is detected in the image region corresponding to the strip.

SUMMARY

In view of the above, the present system and method is provided. The present system and method may be applied to display systems like those described above to improve the performance of such systems. The present invention provides display devices and a display method as defined in the appended claims.

BRIEF DESCRIPTION OF THE DRAWINGS

FIG. 1 is a block diagram showing an entire configuration of an image display system, including an image display device, according to a first embodiment of the present invention;
FIG. 2 is a circuit diagram showing a detailed configuration of a pixel in the image display device shown in FIG. 1;
FIGS. 3A and 3B are respectively schematic views showing an outline of a stereoscopic image displaying operation in the image display system shown in FIG. 1;
FIGS. 4A to 4C are respectively timing charts explaining a backlight controlling operation in the image display system shown in FIG. 1;

FIGS. 5A and 5B are respectively a conceptual view showing the case where an image for a left-hand side eye, and an image for a right-hand side eye are made to overlap each other, and a graphical representation showing a profile of an amount of parallax;

FIGS. 6A to 6C are respectively timing charts explaining a backlight controlling operation, before change of a timing, in the image display system shown in FIG. 1;

FIGS. 7A to 7C are respectively timing charts explaining a backlight controlling operation, after change of the timing, in the image display system shown in FIG. 1;

FIGS. 8A to 8c are respectively timing charts explaining a backlight controlling operation, before change of a Duty, in an image display system, including a liquid crystal display device, according to a first illustrative example;

FIGS. 9A to 9C are respectively timing charts explaining a backlight controlling operation, after change of the Duty, in the image display system, including the liquid crystal display device, according to the first illustrative example;

FIGS. 10A and 10B are respectively schematic views showing an image for adjustment according to a second illustrative example; and

FIGS. 11A and 11B are respectively schematic views showing an outline of an image displaying operation in a multi-view system according to a modification of the present invention.

## DETAILED DESCRIPTION OF THE PREFERRED EMBODIMENTS

It has been recognized that in stereoscopic image display systems like the system described above and similar systems interference between the continuous images limits system performance. Such interference may be referred to as "crosstalk". The amount of crosstalk that occurs in a given display system may be a function of the characteristics of the display device and the shutter. For instance, crosstalk may arise from insufficiency of a response speed in the liquid crystal display device, insufficiency of a contrast in the shutter eyeglasses, and so on. Thus, for example, there is caused such a phenomenon that a part of the image for the left-hand side eye, and a part of the image for the right-hand side eye leak in the right-hand side eye, and the left-hand side eye, respectively. Accordingly, there is a desire to reduce or minimize the undesirable effects of crosstalk. In particular, there is a desire to reduce or minimize the undesirable effects of crosstalk in a manner that takes into consideration the impact of such reduction or minimization on other system parameters.

In view of the desire to reduce or minimize the undesirable effects of crosstalk, the present system and method is provided. In the present system and method, provided light is modulated to generate images, and at least one of the timing or duty of the provided light is controlled. By allowing for control of the timing and/or duty of the provided light, the system and method allows the provided light to be controlled in a manner that reduces or minimizes the undesirable effects of crosstalk. Further, the system and method allows for the reduction or minimization of the undesirable effects of crosstalk in a manner that takes into consideration the impact of such reduction or minimization on other system parameters.

In order to cope with the phenomenon of crosstalk, in the stereoscopic image display system using the shutter eyeglasses described in Patent Document 1, a light blocking period of time for which both the portions for the left-hand side eye and the right-hand side eye are set in a light blocking state at the same time is provided in the shutter eyeglasses. As a result, although the luminance is reduced, it is possible to suppress the causing of the crosstalk. Here, in the liquid crystal display device, an illuminated light from a backlight is used during the display of the image in many cases. For this reason, it is also possible that the backlight is not held in an ON state on a steady basis, but both the portions for the left-hand side eye and the right-hand side eye are set in the same light blocking state as that described above by providing a turn-OFF period of time in the backlight, thereby suppressing the causing of the crosstalk.

However, in such a case, a start time (hereinafter referred to as "a timing") of a turn-ON period of time in the backlight, and a length of the turn-ON period of time (Duty) are set as fixed values in advance, for example, with a central portion of a screen as a reference, and thus cannot be changed after the liquid crystal display device is shipped as a product. Here, when the video signal is written from the upper portion to the lower portion of the screen in the line-sequential manner as described above, until target luminances of the upper portion and the lower portion of the screen are reached, a time lag is caused between the upper portion and the lower portion of the screen. For this reason, when the timing and the Duty of the turn-ON period of time in the backlight are set, for example, with the central portion of the screen as the center, the gaps from the target luminances are caused in the upper portion and the lower portion of the screen, respectively. As a result, it becomes easy to cause the crosstalk. That is to say, the optimal timing and Duty of the turn-ON period of time in the backlight for the suppression of the crosstalk differ depending on the positions within the screen.

Therefore, in the case where the timing and the duty of the turn-ON period of time in the backlight are fixed like in Patent Document 1, it may impossible to set the optimal timing and Duty of the turn-ON period of time in the backlight in accordance with the contents of the various kinds of images. In addition, it may impossible to meet various kinds of needs of a user such as a need that the high luminance promotion is desired to be given priority rather than desired to reduce the crosstalk, a need that even when the luminance is somewhat reduced contrary to that need, the crosstalk is desired to be made less, and so on. Therefore it is desired to realize an image display device in which crosstalk can be suppressed in accordance with the contents of an image and use situations.

The present invention has been made in order to solve the problems described above, and it is therefore desirable to provide an image display device in which a crosstalk can be suppressed in accordance with the contents of an image, and use situations, and an image display system using the same.

With the image display device and the image display system according to the embodiments of the present invention, the control for turning ON the light source portion is carried out for the period of time for display of each of the plurality of images which are switched over to one another in the time division manner to be displayed. At this time, at least one of the start time and the length of the turn-ON period of time is changed to optimize the start time and the length of the turn-ON period of time, thereby suppressing the crosstalk caused between the continuous images.

According to the embodiment of the present invention, the display portion switches a plurality of images over to one another in the time division manner to display the plurality of images. Also, the light source controlling portion turns ON the light source portion for the period of time for display of each of the images, and changeably controls at least one of the start time and the length of the turn-ON period of time. Accordingly, it is possible to suppress the crosstalk in accordance with the contents of the image, and the use applications.

The preferred embodiments of the present invention will be described in detail with reference to the accompanying drawings. It is noted that the description will be given below in the following order.

    1. First Embodiment (an embodiment in which a timing of a turn-ON period of time in a backlight is changed based on an amount of parallax)
    2. Second Embodiment (an embodiment in which the timing of the turn-ON period of time in the backlight is changed based on a contrast)
    3. Modification 1 (a modification of the second embodiment in which a Duty of the turn-ON period of time in the backlight is changed based on the contrast)
    4. Modification 2 (a modification in which the timing or the Duty of the turn-ON period of time in the backlight is changed in accordance with an external input signal)
    5. Modification 3 (a modification in which the Duty of the turn-ON period of time in the backlight is changed in accordance with a panel temperature)
    6. Modification 4 (a modification about a multi-view system)

<First Embodiment>

[Entire Configuration of Image Display System]

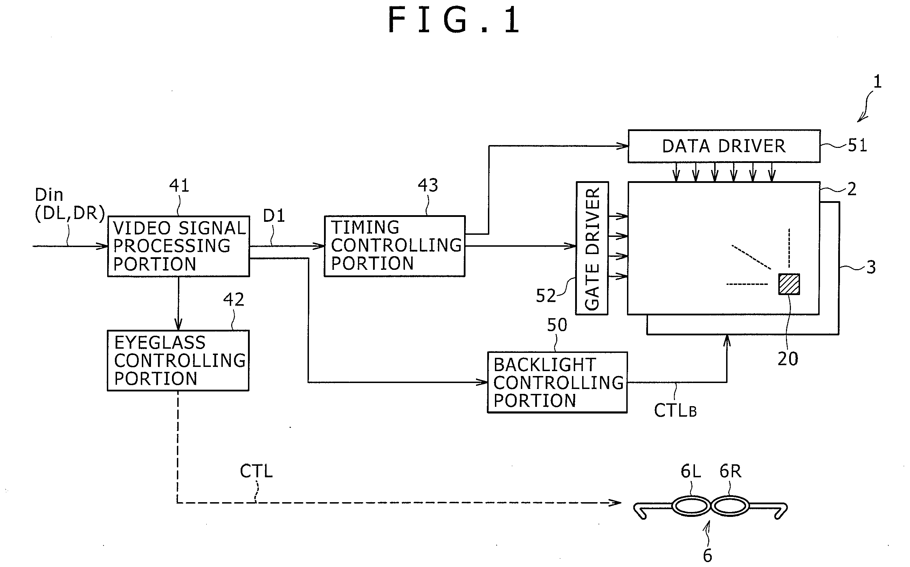

FIG. 1 is a block diagram showing an entire configuration of an image display system, including an image display device, according to a first embodiment of the present invention. The image display system according to the first embodiment of the present invention is a stereoscopic image display system using a time division driving system, and includes the image display device (the liquid crystal display device 1) according to an embodiment of the present invention, and shutter eyeglasses 6.

The liquid crystal display device 1 carries out image display in accordance with an input video signal Din containing therein a video signal DR for a right-hand side eye, and a video signal DL for a left-hand side eye which have mutually a right- and-left parallax. The liquid crystal display device 1 includes a liquid crystal display panel 2, a backlight 3, a video signal processing portion (image processing portion) 41, an eyeglass controlling portion 42, a timing controlling portion 43, a backlight controlling portion 50, a data driver 51, and a gate driver 52.

The backlight 3 is a light source for radiating a light to the liquid crystal display panel 2, and, for example, includes a plurality of Light Emitting Diodes (LEDs) or Cold Cathode Fluorescent Lamps (CCFLs). Moreover, when the CCFL is used in the backlight 3, an afterglow is readily generated, and the afterglow characteristics differ among R, G and B. For this reason, the LED having the less afterglow is preferably used in the backlight 3. The backlight 3 is controlled in accordance with a control signal $CTL_B$ supplied from the backlight controlling portion 50 in such a way that a turn-ON operation (light emitting operation) and a turn-OFF operation are switched over to each other in a time division manner.

The liquid crystal display panel 2 modulates a light emitted from the backlight 3 based on a video voltage, which is supplied from the data driver 51, in accordance with a drive signal supplied from the gate driver 52, thereby carrying out the image display based on the output video signal $D_{in}$. Specifically, although the details will be described later, the liquid crystal display panel 2 alternately displays thereon an image for the right-hand side eye based on the video signal DR for the right-hand side eye, and an image for the left-hand side eye based on the video signal DL for the left-hand side eye in the time division manner for one frame period of time. The liquid crystal display panel 2 includes a plurality of pixels 20 which are disposed in a matrix as a whole.

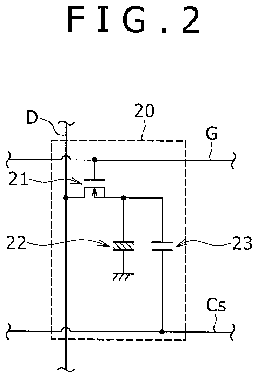

Here, a detailed configuration of each of the pixels 20 will be described with reference to FIG. 2. FIG. 2 shows an example of a circuit configuration of a pixel circuit provided within each of the pixels 20. The pixel 20 includes a liquid crystal element 22, a Thin Film Transistor (TFT) element 21, and a subsidiary capacitor element 23. A gate line G, a data line D, and a subsidiary capacitor line Cs are each connected to the pixel 20. In this case, the pixels 20 each as an object of the drive are selected in the line-sequential manner through the gate line G. Also, a video voltage (a video voltage supplied from the data driver 51) is supplied to the pixels each as the object of the drive through the data line D.

The liquid crystal element 22 carries out a displaying operation in accordance with the video voltage which is supplied from the data line D to one terminal of the liquid crystal element 22 through the TFT element 21. In the liquid crystal element 22, a liquid crystal layer (not shown), for example, is composed of a liquid crystal having either a Vertical Alignment (VA) mode or a Twisted Nematic (TN) mode is sandwiched between a pair of electrodes (not shown). One (one terminal) of the pair of electrodes in the liquid crystal element 22 is connected to each of a drain terminal of the TFT element 21 and one terminal of the subsidiary capacitor element 23, and the other (the other terminal) of the pair of electrodes is grounded. The subsidiary capacitor element 23 is a capacitor element for stabilizing the electric charges accumulated in the liquid crystal element 22. One terminal of the subsidiary capacitor element 23 is connected to each of one terminal of the liquid crystal element 22, and the drain terminal of the TFT element 21, and the other terminal of the subsidiary capacitor element 23 is connected to the subsidiary capacitor line Cs. The TFT element 21 is a switching element for supplying the video voltage based on a video signal D1 to each of one terminal of the liquid crystal element 22 and one terminal of the subsidiary capacitor element 23. Also, the TFT element 21 is composed of a Metal Oxide Semiconductor-Field Effect Transistor (MOS-FET). A gate electrode and a source electrode of the TFT element 21 are connected to the gate line G and the data line D, respectively, and the drain terminal of the TFT element 21 is connected to each of one terminal of the liquid crystal element 22 and one terminal of the subsidiary capacitor element 23.

The video signal processing portion 41 carries out control for write order (display order) about the video signal DR for the right-hand side eye, and the video signal DL for the left-hand side eye in accordance with the input video signal Din, thereby creating the video signal D1. In this case, the video signal processing portion 41 creates the video signal D1 in which the video signal DL for the left-hand side eye and the video signal DR for the right-hand side eye are alternately disposed for one frame period of time. It should be noted that hereinafter, of one frame period of time, the display period of time for the image for the left-hand side eye, and the display period of time for the image for the right-hand side eye are referred to as "an L sub-frame period of time" and "an R sub-frame period of time," respectively.

With such a video signal processing portion 41, although the details will be described later, it is possible to detect an amount of parallax, and a contrast between the image for the right-hand side eye and the image for the left-hand side eye.

The timing controlling portion 43 controls drive timings for the gate driver 52 and the data driver 51, respectively, and supplies the video signal D1 supplied thereto from the video signal processing portion 41 to the data driver 51. The timing controlling portion 43 may execute over-drive processing for the video signal D1.

The gate driver 52 drives the pixels 20 disposed within the liquid crystal display panel 2 in the line-sequential manner along the gate lines G in accordance with the timing control made by the timing controlling portion 43.

The data driver 51 supplies the video voltage based on the video signal D1, which are supplied from the timing controlling portion 43, to the pixels 20 disposed in the liquid crystal display panel 2. Specifically, the data driver 51 subjects the video signal D1 to digital/analog (D/A) conversion, thereby creating the video signal (the video voltage described above) as the analog signal which is in turn outputted to the pixels 20.

The eyeglass controlling portion 42 outputs a timing control signal (a control signal CTL) corresponding to the timings for the video signal DR for the right-hand side eye, and the video signal DL for the left-hand side eye which are processed in the video signal processing portion 41 to the shutter eyeglasses 6. It is noted that although a radio signal such as an infrared signal is used as the timing control signal CTL, in this case, a wired signal may also be used.

An observer (not shown in FIG. 1) of the liquid crystal display device 1 wears the shutter eyeglasses 6, thereby making it possible to realize the stereoscopic viewing in the liquid crystal display device 1. The shutter eyeglasses 6 include a lens 6L for the left-hand side eye, and a lens 6R for the right-hand side eye each of which is provided with a light blocking shutter (not shown) such as a liquid crystal shutter. A valid state (close state) and an invalid state (open state) of a light blocking function in each of these light blocking shutters are controlled in accordance with a control signal CTL supplied from the eyeglass controlling portion 42.

Specifically, the eyeglass controlling portion 42 controls the shutter eyeglasses 6 in such a way that the open state and the close state in each of the lens 6L for the left-hand side eye, and the lens 6R for the right-hand side eye are alternately switched over to each other so as to correspond to the periods of time for display of the image for the left-hand side eye, and the image for the right-hand side eye, respectively. In other words, the eyeglass controlling portion 42 controls the shutter eyeglasses 6 in such a way that for the L sub-frame period of time, the lens 6L for the left-hand side eye is set in the open state, and the lens 6R for the right-hand side eye is set in the close state. On the other hand, the eyeglass controlling portion 42 controls the shutter eyeglasses 6 in such a way that for the R sub-frame period of time, the lens 6R for the right-hand side eye is set in the open state, and the lens 6L for the left-hand side eye is set in the close state. It should be noted that the lens 6L for the left-hand side eye, and the lens 6R for the right-hand side eye in the shutter eyeglasses 6 are a concrete example of "shutter mechanisms" in an embodiment of the present invention, respectively.

(Configuration of Backlight Controlling Portion 50)

The backlight controlling portion 50 supplies a timing control signal (a control signal $CTL_B$) corresponding to output timings for the video signal DR for the right-hand side eye, and the video signal DL for the left-hand side eye which are processed in the video signal processing portion 41 to the backlight 3. As a result, the backlight controlling portion 50 carries out the control in such a way that an operation for turning ON the backlight 3, and an operation for turning OFF the backlight 3 are switched over to each other in the time division manner synchronously with the display switching for the image for the left-hand side eye, and the image for the right-hand side eye. Specifically, the backlight controlling portion 50 turns ON the backlight 3 at a predetermined timing (start time) and with a predetermined Duty (length) for each of the periods of time for display of the image of the left-hand side eye, and the periods of time for display of the image of the right-hand side eye.

In the first embodiment, the backlight controlling portion 50 changeably controls a timing for the turn-ON period of time in the backlight 3. Specifically, although the details will be described later, the backlight controlling portion 50 sets (changes) the timing for the turn-ON period of time, for example, every frame, for example, in accordance with an amount of parallax between the image for the right-hand side eye, and the image for the left-hand side eye which are continuous.

[Operation and Effects of Image Display System]

(1. Image Displaying Operation of Liquid Crystal Display Device 1)

In the image display system, using the liquid crystal device 1, of the first embodiment, as shown in FIG. 1, in the liquid crystal display device 1, the video signal processing portion 41 carries out the control for the write order for the video signal DR for the right-hand side eye, and the video signal DL for the left-hand side eye in accordance with the input video signal Din, thereby creating the video signal D1. The resulting video signal D1 is supplied to the data driver 51 through the timing controlling portion 43. Then, the data driver 51 subjects the video signal D1 supplied thereto to the D/A conversion, thereby creating the video voltage as the analog signal. Also, the display driving operation is carried out in accordance with the drive voltages which are outputted from the gate driver 52 and the data driver 51 to the pixels.

Specifically, as shown in FIG. 2, the ON and OFF operations of the TFT element 21 are switched over to each other in accordance with a selection signal which is supplied from the gate driver 52 to the gate terminal of the TFT element 21 through the gate line G. As a result, the selective conduction is obtained between the data line D, and the liquid crystal element 22 and the subsidiary capacitor element 23. Accordingly, the video voltage based on the video signal D1 supplied from the data driver 51 is supplied to the liquid crystal element 22, so that the display driving operation is carried out in the line-sequential manner. It should be noted that in this specification, the scanning direction (image writing direction) in the line-sequential drive is set as the vertical direction (longitudinal direction) in the screen.

In the pixel 20 to which the video voltage is supplied in such a manner, the illuminated light from the backlight 3 is modulated in the liquid crystal display panel 2 and is then emitted in the form of a display light. As a result, the image display based on the input video signal Din is carried out in the liquid crystal display device 1. In this connection, specifically, one frame period of time is divided into the L sub-frame period of time, and the R sub-frame period of time. Thus, the image for the left-hand side eye based on the video signal DL for the left-hand side eye is displayed for the L sub-frame period of time, and the image for the right-hand side eye based on the video signal DR for the right-hand side eye is displayed for the R sub-frame period of time. The image for the left-hand side eye, and the image for the right-hand side eye are alternately displayed in such a manner, whereby the display driving operation is carried out in accordance with the time division drive.

(2. Eyeglass Controlling Operation)

On the other hand, the eyeglass controlling portion 42 outputs the predetermined control signal CTL to the shutter eyeglasses 6 in accordance with the timing control made by the video signal processing portion 41. As a result, the opening operation and the closing operation for each of the lens 6L for the left-hand side eye, and the lens 6R for the right-hand side eye are carried out synchronously with the display switching of the image for the left-hand side eye, and the image for the right-hand side eye.

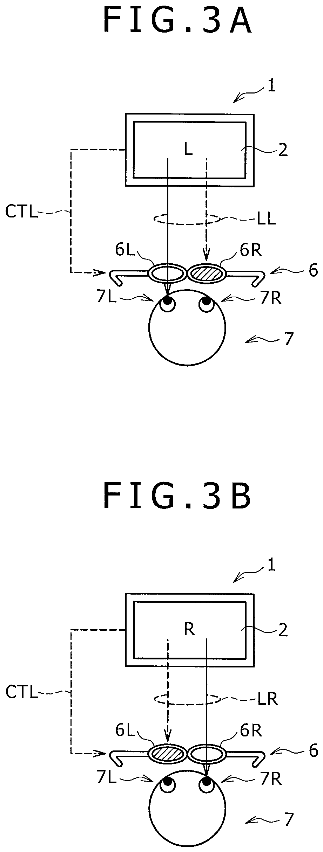

Specifically, the shutter eyeglasses 6 are controlled in such a way that as shown in FIG. 3A, for the L sub-frame period of time, the lens 6L for the left-hand side eye is set in the open state and the lens 6R for the right-hand side eye is set in the close state in accordance with the control signal CTL, so that a display light LL based on the image for the left-hand side eye transmits only the lens 6L for the left-hand side eye. On the other hand, the shutter eyeglasses 6 are also controlled in such a way that as shown in FIG. 3B, for the R sub-frame period of time, the lens 6R for the right-hand side eye is set in the open state and the lens 6L for the left-hand side eye is set in the close state in accordance with the control signal CTL, so that the display light LR based on the image for the right-hand side eye transmits only the lens 6R for the right-hand side eye 6R.

As has been described, in the liquid crystal display device 1, the image for the left-hand side eye, and the image for the right-hand side eye are displayed for the L sub-frame period of time, and for the R sub-frame period of time, respectively. Also, in the shutter eyeglasses 6, the lens 6L for the left-hand side eye is set in the open state for the L sub-frame period of time, and the lens 6R for the right-hand side eye is set in the open state for the R sub-frame period of time. The observer 7 observes the display screen of the liquid crystal display device 1 with the shutter eyeglasses 6 put on him/her, whereby he/she can view the image for the left-hand side eye and the image for the right-hand side eye by his/her left-hand side eye and right-hand side eye, respectively. Since there is a parallax between the image for the left-hand side eye, and the image for the right-hand side eye, the image for the left-hand side eye, and the image for the right-hand side eye can be recognized as the deep and stereoscopic image by the observer 7.

(3. Backlight Controlling Operation)

Next, a description will be given with respect to a backlight controlling operation in the backlight controlling portion 50.

(3-1. Basic Operation)

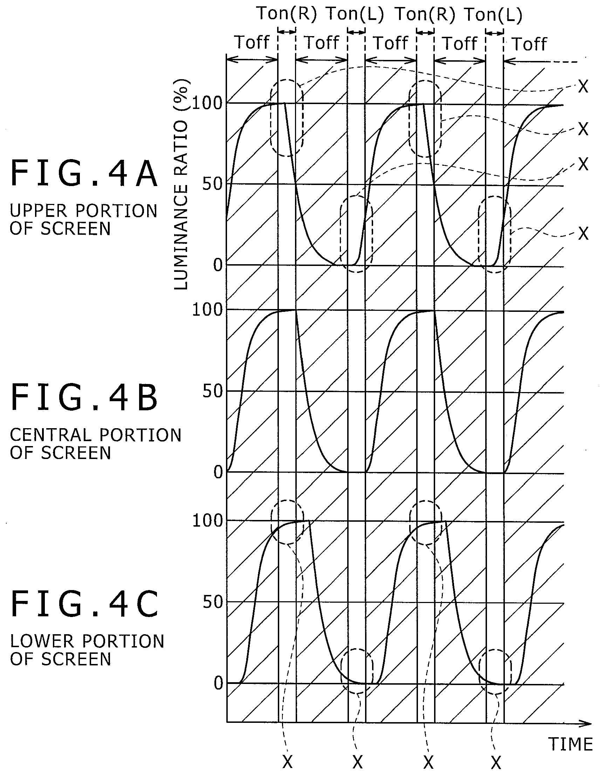

Firstly, the basic backlight controlling operation will be described with reference to FIGS. 4A to 4C. FIG. 4A shows a relationship between a luminance ratio, and a turn-ON period Ton(L) of time corresponding to the L sub-frame period of time, a turn-ON period Ton(R) of time corresponding to the R sub-frame period of time, and a turn-OFF period Toff of time (portions, in the timing chart of FIG. 4A, each indicated by a slant line) in the upper portion of the screen. FIG. 4B shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the central portion of the screen. Also, FIG. 4C shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the lower portion of the screen. In addition, the case where the video voltages corresponding to a 0 gradation for the image for the left-hand side eye, and 255 gradations for the image for the right-hand side eye are written to each of the upper portion, the central portion, and the lower portion of the screen, respectively, is given as an example.

The backlight controlling portion 50 supplies the control signal $CTL_B$ corresponding to the output timings for the video signal DR for the right-hand side eye, and the video signal DL for the left-hand side eye to the backlight 3. As a result, the backlight controlling portion 50 switches the turn-ON period of time (Ton(L), Ton(R)), and the turn-OFF period of time (Toff) over to each other in the backlight 3 in the time division manner. As a result, the crosstalk can be further suppressed as compared with the case where the backlight is turned ON on a steady basis (no turn-OFF period of time is provided in the backlight). In addition, the power consumption can be further suppressed as compared with the case where the backlight is turned ON on a steady basis. Also, when the light emission luminance in the turn-ON period of time is enhanced, the display luminance can be efficiently enhanced.

However, when the video signal is written from the upper portion to the lower portion of the screen in the line-sequential manner, the write timing differs depending on the positions along the scanning direction. As a result, the time lag is caused in the display screen until a target luminance (desired luminance) has been reached depending on the positions within the display screen. For example, when the timings for the turn-ON period (Ton(L)) of time and the turn-ON period (Ton(R)) of time are set, for example, with the central portion of the screen as the reference (that is, so that as shown in FIG. 4B, the target luminance can be displayed in the central portion of the screen), the crosstalk is reduced in the central portion of the screen. However, the crosstalk (X) is caused in each of the upper portion of the screen (close to the scanning start position) having the earlier write timing than that of the central portion of the screen, and the lower portion of the screen (close to the scanning end position) having the later write timing than that of the central portion of the screen. That is to say, the timing or the Duty of the turn-ON period of time, in the backlight 3, which are optimal for suppression of the crosstalk differs depending on the positions within the screen. It should be noted that such a crosstalk is especially, readily caused when the response speed of the liquid crystal is insufficient or when the contrast in the shutter eyeglasses 6 is insufficient.

(3-2. Operation for Changing Turn-ON Period of Time Based on Amount of Parallax)

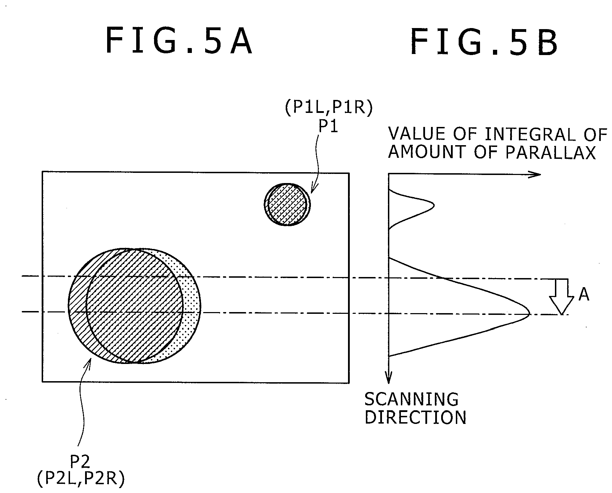

In order to cope with such a situation, in the first embodiment, the backlight controlling portion 50 changeably controls the timing for the turn-ON period of time in the backlight 3. Hereinafter, an operation for changing the timing for the turn-ON period of time in the backlight 3 will be described with reference to FIGS. 5A and 5B to FIGS. 7A to 7C. FIGS. 5A and 5B are respectively a conceptual view showing a state in which the image for the right-hand side eye, and the image for the left-hand side eye which are displayed for one frame period of time are made to overlap each other, and a graphical representation showing a profile of an amount of parallax. It is noted that in the following description, a state in which the timing for the turn-ON period of time is set with the control portion of the screen as the reference will be described as an example of an initial state before change of the timing.

In the first embodiment, the backlight controlling portion 50 changes the timing for the turn-ON period of time in the backlight 3, for example, in accordance with an amount of parallax between the image for the right-hand side eye, and the image for the left-hand side eye which are continuous, for example, every frame. Specifically, the timing for the turn-ON period of time is adjusted in accordance with the profile of an amount of parallax detected along the screen scanning direction so that the crosstalk becomes minimum in a position where a maximum value is obtained in an amount of parallax. For example, when the timing is set with the central portion of the screen as the reference, the timing is changed in the manner as will be described below. That is to say, when the position where the maximum value is obtained in the profile of an amount of parallax is closer to the scanning start position than to the central portion of the screen, the timing is changed so as to become earlier. On the other hand, when the position where the maximum value is obtained in the profile of an amount of parallax is closer to the scanning end position than to the central portion of the screen, the timing is changed so as to become later.

For example, when as shown in FIG. 5A, a picture P1 (a picture P1L for the left-hand side eye and a picture P1R for the right-hand side eye), and a picture P2 (a picture P2L for the left-hand side eye and a picture P2R for the right-hand side eye) are displayed as a stereoscopic image in the upper portion of the screen, and in the central portion of the screen, respectively, a profile of an amount of parallax, for example, is as shown in FIG. 5B. That is to say, since an amount of parallax in a portion corresponding to the picture P2 within the screen (an amount of parallax between the picture P2L and the picture P2R) become maximum, the timing for the turn-ON period of time is adjusted so that, for example, the crosstalk becomes minimum in a portion A shown in FIG. 5B.

As has been described, the image for the left-hand side eye, and the image for the right-hand side eye which are displayed for one frame period of time in the time division manner has mutually the parallax. Also, an amount of parallax differs every position within the screen in accordance with the picture displayed. In addition, the crosstalk is more easily conspicuous in the position having a large amount of parallax than in the position having a small amount of parallax. Therefore, the timing for the turn-ON period of time is changed with the position having the maximum amount of parallax as the reference in accordance with the profile of an amount of parallax between the image for the left-hand side eye, and the image for the right-hand side eye in the manner described above, whereby the crosstalk can be effectively suppressed in the portion in which the crosstalk is more easily conspicuous. That is to say, the timing for the turn-ON period of time in the backlight 3 can be optimized, thereby making a good impression in terms of the entire displayed picture.

It is noted that the detection of the profile of an amount of parallax between the image for the left-hand side eye, and the image for the right-hand side eye as described above, for example, can be carried out in the video signal processing portion 41. In this connection, for example, an amount of parallax is detected by carrying out corresponding point matching between the image for the left-hand side eye, and the image for the right-hand side eye.

As described above, in the first embodiment, since the timing for the turn-ON period of time in the backlight 3 is changed in accordance with an amount of parallax between the image for the left-hand side eye, and the image for the right-hand side eye in the backlight controlling portion 50, the timing for the turn-ON period of time can be optimized in accordance with the picture or the like of the displayed image. Therefore, it becomes possible to effectively suppress the crosstalk in accordance with the contents of the image.

<Second Embodiment>

Next, an image display system, including the image display device, according to a second embodiment of the present invention will be described. It is noted that the same constituent elements as those in the first embodiment described above are designated by the same reference symbols, respectively, and a description thereof is suitably omitted here for the sake of simplicity.

Although in the image display system of the second embodiment has the same constituent elements as those in the image display system, including the image display device, of the first embodiment, the backlight controlling portion 50 carries out an operation for controlling a timing for a turn-ON period of time which is different from that in the first embodiment described above. That is to say, although in the first embodiment, the timing for the turn-ON period of time is changed in accordance with an amount of parallax between the image for the left-hand side eye, and the image for the right-hand side eye, in the second embodiment, the timing for the turn-ON period of time is changed in accordance with a contrast (hereinafter referred to as "an LR contrast").

Specifically, the timing for the turn-ON period of time is adjusted in accordance with the profile of the LR contrast detected along the screen scanning direction so that the crosstalk becomes minimum in a position where the maximum value is obtained in the profile of the LR contrast. For example, at this time, when the timing is set with the central portion of the screen as the reference, the timing is changed in the manner as will be described below. That is to say, when the position where the maximum value is obtained in the profile of the LR contrast is closer to the scanning start position than to the central portion of the screen, the timing is changed so as to become earlier. On the other hand, when the position where the maximum value is obtained in the profile of the LR contrast is closer to the scanning end position than to the central portion of the screen, the timing is changed so as to become later. It is noted that the LR contrast, for example, can be detected in the video signal processing portion 41. In this connection, specifically, the LR contrast (CR) is calculated from gradations of the image for the left-hand side eye, and the image for the right-hand side eye in the same pixel. The CR, for example, is calculated by using either Expression (1) or Expression (2):

$$CR = (G_{high} - G_{low})/(G_{high} + G_{low}) \quad ... (1)$$

where $G_{high}$ represents larger one of the gradations of the image for the left-hand side eye, and the image for the right-hand side eye, and $G_{low}$ represents smaller one of the gradations of the image for the left-hand side eye, and the image for the right-hand side eye.

$$CR = G_{high}/G_{low} \quad\quad\quad ... (2)$$

However, a calculating formula is by no means limited to either Expression (1) or Expression (2), and thus various kinds of calculating formulas can be used for calculation of the CR.

Here, it takes a longer time to reach the target luminance in a position where the LR contrast is high within the screen than in a position where the LR contrast is low. In particular, the crosstalk is readily caused when the response speed of the liquid crystal is insufficient. Therefore, with regard to the case of the timing control based on the LR contrast as well, similarly to the timing control based on an amount of parallax in the first embodiment, the timing for the turn-ON period of time is changed with the position, where the maximum value is obtained in the profile of the LR contrast in the screen scanning direction, as the reference, thereby making it possible to more effectively suppress the crosstalk.

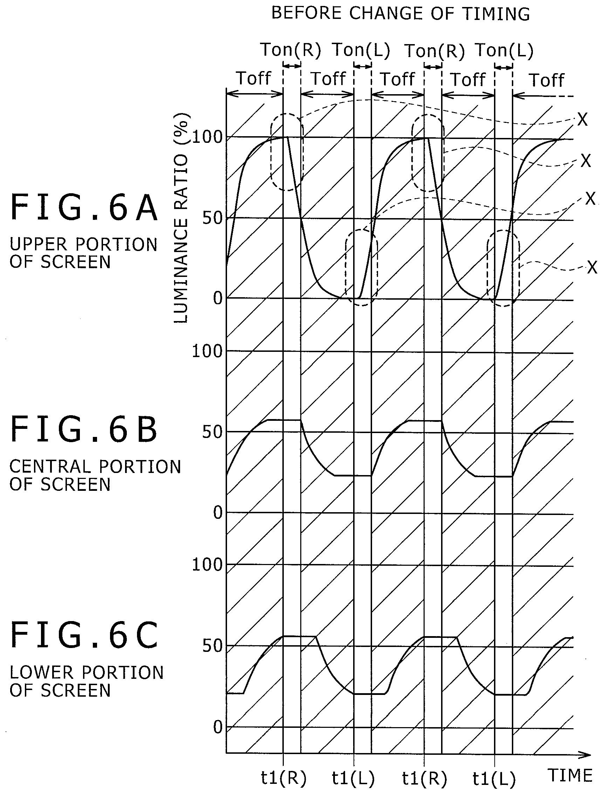

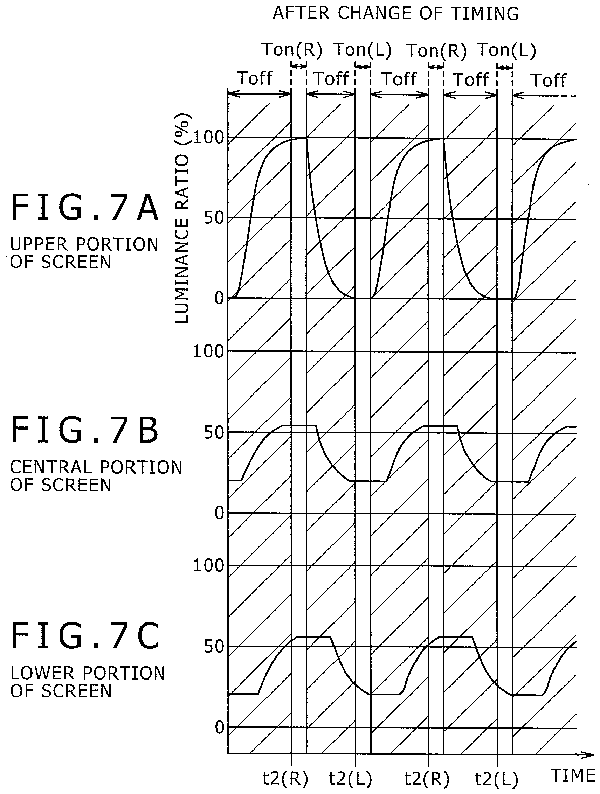

As an example, FIG. 6A shows a relationship between a luminance ratio, and the turn-ON period Ton(L) of time corresponding to the L sub-frame period of time, the turn-ON period Ton(R) of time corresponding to the R sub-frame period of time, and the turn-OFF period Toff of time (portions, in the timing chart of FIG. 6A, each indicated by a slant line) in the upper portion of the screen before change of the timing. FIG. 6B shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the central portion of the screen before change of the timing. Also, FIG. 6C shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the lower portion of the screen before change of the timing. In addition, FIG. 7A shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time (portions, in the timing chart of FIG. 7A, each indicated by a slant line) in the upper portion of the screen after change of the timing. FIG. 7B shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the central portion of the screen after change of the timing. Also, FIG. 7C shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the lower portion of the screen after change of the timing. In each of these examples shown in FIG. 6A to 6C, and FIGS. 7A to 7C, respectively, the LR contrast is higher in the upper portion of the screen than in each of the central portion of the screen, and the lower portion of the screen. For example, the case where the video voltage corresponding to a 0 gradation as the image for the left-hand side eye, and 255 gradations as the image for the right-hand side eye is written to the upper portion of the screen, and the video voltage corresponding to 128 gradations as the image for the left-hand side eye, and 192 gradations as the image for the right-hand side eye is written to each of the central portion and the lower portion of the screen is given as an example.

As shown in FIGS. 6A to 6C, in the case where the turn-ON period Ton(L) of time is set at the timing t1(L), t1(R) set with the central portion of the screen as the reference, when the LR contrast becomes maximum in the upper portion of the screen, the crosstalk X1 is readily caused (readily conspicuous) in the upper portion of the screen. In order to cope with such a situation, in this case, as shown in FIGS. 7A to 7C, the timing is changed to a timing t2(L), t2(R) which is earlier than the timing t1(L), t1(R), thereby suppressing the crosstalk in the upper portion of the screen. It is noted that although by changing the timing in the manner as described above, the crosstalk becomes large in the lower portion of the screen as compared with the case before change of the timing in some cases, the crosstalk is hardly conspicuous because the LR contrast is lower in the lower portion of the screen than in the upper portion of the screen. Therefore, the timing for the turn-ON period of time in the backlight 3 is changed in accordance with the LR contrast, thereby making it possible to effectively suppress the crosstalk.

As has been described, in the second embodiment, since the timing for the turn-ON period of time in the backlight 3 is changed in accordance with the contrast between the image for the left-hand side eye, and the image for the right-hand side eye, the timing for the turn-ON period of time can be optimized in accordance with the picture or the like of the displayed image. Therefore, it is possible to obtain the same effects as those in the first embodiment described above.

<Illustrative Example 1>

Next, a first illustrative example will be described. It is noted that the same constituent elements as those in each of the first and second embodiments are designated by the same reference symbols, respectively, and a description thereof is suitably omitted here for the sake of simplicity.

Although in the second embodiment, the timing for the turn-ON period of time in the backlight 3 is changed in accordance with the LR contrast in the backlight controlling portion 50, in illustrative example 1, the Duty for the turn-ON period of time is changed in accordance with the LR contrast. Specifically, a statistical value, for example, an average value or a total sum of the LR contrast in the entire one picture is detected, and the Duty of the turn-ON period of time is changed in accordance with the statistical value thus detected. It is noted that the statistical value of the LR contrast, for example, can be detected in the video signal processing portion 41.

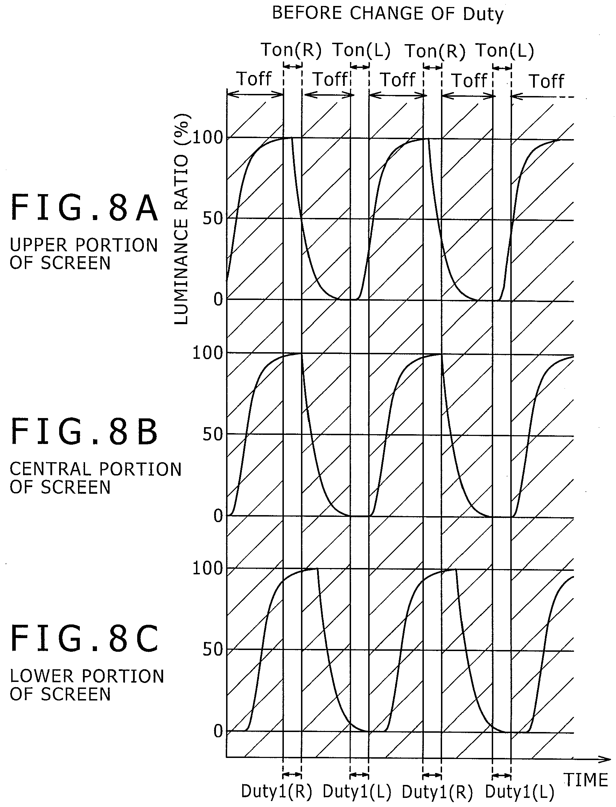

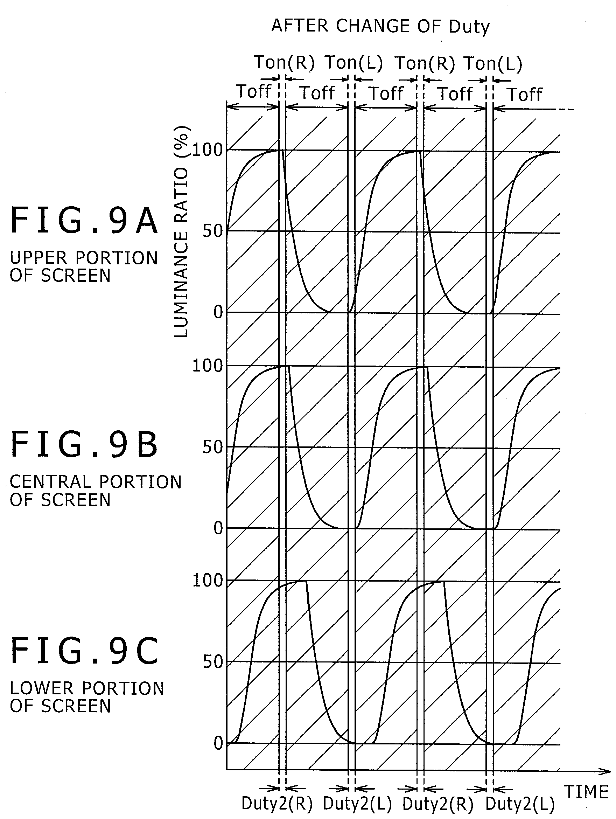

As an example, FIG. 8A shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time (portions, in the timing chart of FIG. 8A, each indicated by a slant line) in the upper portion of the screen before change of the Duty. FIG. 8B shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the central portion of the screen before change of the timing. Also, FIG. 8C shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the lower portion of the screen before change of the timing. In addition, FIG. 9A shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time (portions, in the timing chart of FIG. 9A, each indicated by a slant line) in the upper portion of the screen after change of the Duty. FIG. 9B shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the central portion of the screen after change of the Duty. Also, FIG. 9C shows a relationship between the luminance ratio, and the turn-ON period Ton(L) of time corresponding to the L sub-frame period of time, the turn-ON period Ton(R) of time corresponding to the R sub-frame period of time, and the turn-OFF period Toff of time in the lower portion of the screen after change of the Duty. In these example shown in FIG. 8A to 8C, and FIGS. 9A to 9C, respectively, the LR contrast is high in the entire screen. For example, the video voltage corresponding to a 0 gradation as the image for the light-hand side eye, and the video voltage corresponding to 255 gradations as the image for the right-hand side eye are written in each of the upper portion of the screen, the central portion of the screen, and the lower portion of the screen.

When in particular, the entire screen has the high LR contrast in such a manner, the Duty of the turn-ON period of time is preferably reduced. That is to say, when the image having the high LR contrast is displayed on the entire screen in the case where the Duty of the turn-ON period of time is set at the predetermined length (Duty1 (L), Duty1 (R)) (refer to FIGS. 8A to 8C), as shown in FIGS. 9A to 9C, the Duty of the turn-ON period of time is made shorter (Duty2 (L), Duty2 (R)). As a result, the crosstalk can be suppressed in the entire screen.

It is note that although in this case, the case where the Duty of the turn-ON period of time is made shorter when the entire screen has the high LR contrast has been given as the example, when the entire screen has the low LR contrast in contrast thereto, all it takes is that the Duty of the turn-ON period of time is changed so as to become larger.

Since the crosstalk is hardly conspicuous in the case of the LR contrast, the Duty is changed so as to become longer and thus the display luminance can be increased all the more. That is to say, in particular, when the entire screen has the uniform LR contrast, preferably, the Duty is changed as with modification 1. On the other hand, when there is a difference in LR contrast depending on the positions in the screen, preferably, the timing for the turn-ON period of time is changed as with the second embodiment described above. In addition, both the timing and the Duty of the turn-ON period of time are changed, thereby also making it possible to ensure the desired luminance while the crosstalk is suppressed. Moreover, an amount of parallax in the first embodiment described above, and the LR contrast in each of the second embodiment described above and modification 1 thereof may be used in a combined manner to set the timing and the Duty, thereby optimizing the turn-ON period of time.

In addition, although as described above, an amount of parallax or a contrast between the image of the left-hand side eye, and the image for the right-hand side eye may be detected on a case-by-case basis every frame, thereby changing the timing or the Duty of the turn-ON period of time, this process is not necessarily carried out every frame. For example, the timing or the Duty of the turn-ON period of time may also be changed every continuous multiple sets of frames which are high in correlation (which are similar in picture to each other).

Moreover, although in illustrative example 1 described above, the Duty of the turn-ON period of time is changed in accordance with the LR contrast, the Duty of the turn-ON period of time may also be changed in accordance with an amount of parallax described above instead of being changed in accordance with the LR contrast. In the case as well of use of an amount of parallax, all it takes is that a statistical value (such as an average value or a total sum) in the entire picture is obtained, and the Duty of the turn-ON period of time is changed in accordance with the statistical value thus obtained similarly to the case of use of the LR contrast. Specifically, when the statistical value about an amount of parallax is small, the Duty is changed so as to become longer, while when the statistical value about an amount of parallax is large, the Duty is changed so as to become shorter.

<Illustrative examples 2 and 3>

Next, illustrative examples 2 and 3 will be described. It is noted that in the following description, the constituent elements similar to those in each of the first and second embodiment are designated by the same reference symbols, respectively, and a description thereof is suitably omitted here for the sake of simplicity. Although in the first and second embodiments described above, and illustrative example 1, the timing or the Duty of the turn-ON period of time in the backlight 3 is changed depending on the contents of the image
(such as the picture) in accordance with an amount of parallax or the LR contrast about the image as an object of the display, a changing section is by no means limited thereto.

(Illustrative example 2)

For example, a mechanism with which the timing or the Duty of the turn-ON period of time can be changed in accordance with an input signal inputted in accordance with an input signal from the outside, specifically, a command issued from the observer (user) or the like for the displayed image may be specially provided.

In this case, for example, the timing and the Duty of the turn-ON period of time may be made arbitrarily changeable. Or, several kinds of presets (such as normal and dynamic) may be set in advance, and the user may select any suitable one from these presets. In addition, in a phase of change (selection) of such a timing and a Duty, an image for adjustment may be displayed.

Here, the change of the Duty of the turn-ON period of time is accompanied with the trade-off between the brightness and the crosstalk. In addition, since the crosstalk differs depending on the gradation of the image for the right-hand side eye, and the gradation of the image for the left-hand side eye, preferably, various combinations of gradations are present in terms of the image for adjustment. In addition, all it takes is that in changing the timing for the turn-ON period of time, it is possible to recognize with which of the positions within the screen that timing matches. For this reason, preferably, the image for adjustment does not change in the screen scanning direction (i.e., in the vertical direction or in the longitudinal direction), or a regular pattern is repeated in the image for adjustment.

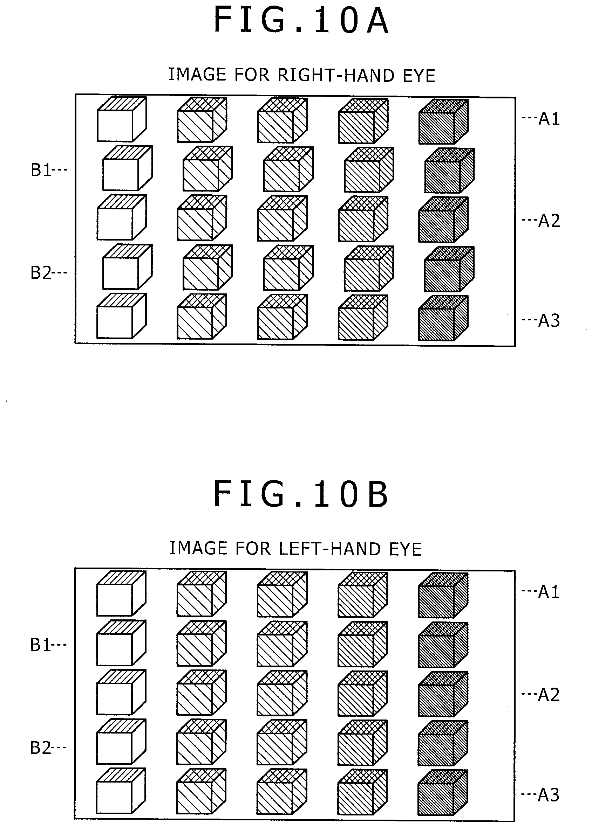

FIGS. 10A and 10B show an example of the image for adjustment meeting the request as described above. In the image for adjustment, with a structure in which, for example, a plurality of cubes are two-dimensionally disposed, a parallax is given between an image for the right-hand side eye, and an image for the left-hand side eye in such a way that the cubes belonging to odd rows (A1, A2 and A3), and the cubes belonging to even rows (B1 and B2) appear to protrude to the observer side (front side) and the back side, respectively. In addition, the cubes having the different gradations are disposed along the horizontal direction (in the transverse direction), thereby realizing a combination of the various gradations. On the other hand, the cubes having the same gradation are disposed in the screen scanning direction (in the vertical direction or in the longitudinal direction). Thus, it is easy to recognize with which of the positions match to the timing.

As has been described so far, the timing or the Duty of the turn-ON period of time can be changed in accordance with the input signal from the outside, whereby the timing or the Duty of the turn-ON period of time can be changed in response to the various requests from the user. For example, by changing the Duty, the adjustment between the brightness and the crosstalk showing the relationship of the trade-off can be carried out, or the timing for the turn-ON period of time can be adjusted to an arbitrarily position within the screen. In addition, in changing the timing or the Duty, the image for adjustment as described above is displayed, whereby the user can visually judge the desired timing or Duty, thereby making the change easy. Therefore, the crosstalk can be suppressed in accordance with the contents of the image, and the use situations.

(Illustrative example 3)

In addition, the backlight controlling portion 50 may change the Duty of the turn-ON period of time in the backlight 3 in accordance with a change in panel temperature. Specifically, in this case, when the panel temperature is low, the Duty of the turn-ON period of time is changed so as to become shorter, while when the panel temperature is high, the Duty of the turn-ON period of time is changed so as to become longer. The reason for this is because although when the panel temperature is low, the response speed of the liquid crystal becomes slow, and thus the crosstalk is easily caused (easily conspicuous), when the panel temperature is high, the response speed of the liquid crystal becomes speedy, and thus the crosstalk is hardly caused (hardly conspicuous). Since although the liquid crystal panel is cold in temperature right after the power source is turned ON, the panel temperature rises with time, it is effective to change the Duty in accordance with a change in panel temperature. Actually, however, since it is difficult to directly measure the panel temperature during use of the liquid crystal device in many cases, an intra-device (intra-apparatus) is measured, and the Duty is changed in accordance with the intra-device temperature.

<Modification>

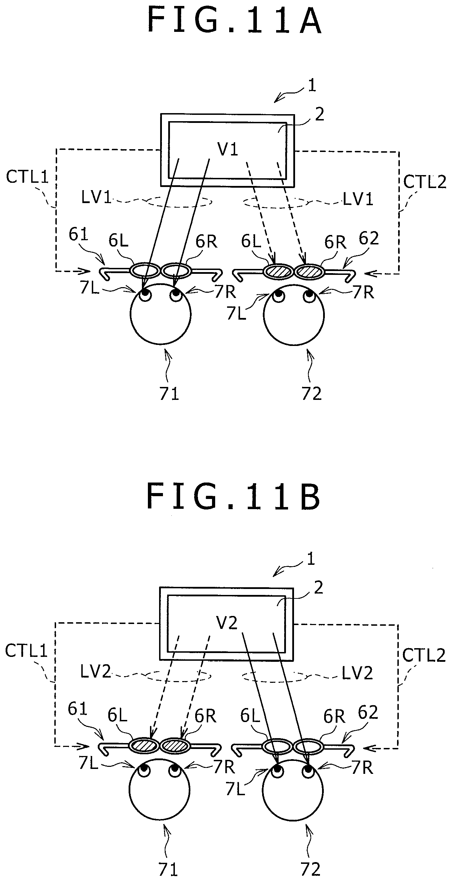

FIGS. 11A and 11B schematically show an outline of an image displaying operation in an image display system (multi-view system) according to a modification of the present invention. In the modification, an image displaying operation for allowing a plurality of images different from one another (two images in this case) to be individually displayed for a plurality of observers (two observers in this case) is carried out instead of carrying out the stereoscopic image displaying operation which has been described until now.

With the multi-view system of the present modification, a first image based on a first video signal corresponding to a first observer, and a second image based on a second video signal corresponding to a second observer are alternately displayed in the time division manner. That is to say, in any of the image display systems which have been described until now, the image for the left-hand side eye, and the image for the right-hand side eye corresponding to the lens for the left-hand side eye 6L, and the lens for the right-hand side eye 6R, respectively, in the shutter eyeglasses 6 are displayed so as to correspond to the lens for the left-hand side eye, and the lens for the right-hand side eye, respectively. On the other hand, in modification 4, a plurality of images corresponding to a plurality of observers (users), respectively, are displayed so as to correspond to a plurality of observers, respectively.

Specifically, as shown in FIG. 11A, for a display period of time for a first image V1, in shutter eyeglasses 61 used by an observer 71, both the lens 6R for the right-hand side eye, and the lens 6L for the left-hand side eye are set in an open state in accordance with a control signal CTL1. On the other hand, in shutter eyeglasses 62 used by an observer 72, both the lens 6R for the right-hand side eye, and the lens 6L for the left-hand side eye are set in a close state in accordance with a control signal CTL2. That is to say, a display light LV1 based on the first image V1 is transmitted through the shutter eyeglasses 61 used by the observer 71, while the display light LV1 is blocked in the shutter eyeglasses 62 used by the observer 72.

On the other hand, as shown in FIG. 11B, for a display period of time for a second image V2, in the shutter eyeglasses 62 used by the observer 72, both the lens 6R for the right-hand side eye, and the lens 6L for the left-hand side eye are set in the open state in accordance with the control signal CTL2. On the other hand, in the shutter eyeglasses 61 used by the observer 71, both the lens 6R for the right-hand side eye, and the lens 6L for the left-hand side eye are set in a close state in accordance with a control signal CTL1. That is to say, a display light LV2 based on the second image V2 is transmitted through the shutter eyeglasses 62 used by the observer 72, while the display light LV2 is blocked in the shutter eyeglasses 61 used by the observer 71.

Such states are alternately repeated in the time division manner, whereby the two observers 71 and 72 can observe individually the images V1 and V2 different from each other.

In the multi-view system as well as described above, the timing and the Duty of the turn-ON period of time in the backlight 3 are changed as described in the above first and second embodiments and the like, whereby it is possible to obtain the same effects as those in the above first and second embodiments and the like.

It should be noted that although in the present modification, the description has been given with respect to the case where the two observers observe individually the two images different from each other, the present invention can also be supplied to the case where the three or more observers observe individually three or more images different from one another. In addition, the number of images, and the number of shutter eyeglasses are not necessarily identical to each other. That is to say, a plurality of shutter eyeglasses which carry out the opening/closing operations so as to correspond to certain one image may be prepared, and a plurality of observers may observe one image.

It should be noted that although the present invention has been described so far by giving the first and second embodiments and the modification, the present invention is by no means limited to those embodiments and the like, and thus various kinds of changes can be made. For example, although the above embodiments and the like have been described by giving the case where the timing or the Duty of the turn-ON period of time in the backlight 3 is changeably controlled as the example, in addition to the control for the turn-ON period of time, an open period of time in the shutter eyeglasses 6 may also be changeably controlled. For example, as described above, since the afterglow is easily generated when the CCFL or the like is used in the backlight 3, for the purpose of avoiding the influence by such an afterglow, it is better to change the timing or the Duty of the open period of time in the shutter eyeglasses 6. It is noted that the timing or the Duty of the open period of time in the shutter eyeglasses 6 may also be optimized in accordance with an amount of parallax or the contrast between the image for the left-hand side eye, and the image for the right-hand side eye similarly to the turn-ON period of time in the backlight 3.

In addition, although the embodiments and the like have been described on the assumption of the state in which the timing or the like is set with the central portion of the screen as the reference as the initial state before change of the timing (or the Duty), the present invention is by no means limited to such a change from the initial state. That is to say, the present invention can be applied to the case where the timing or the like is set with an arbitrary position on the screen as the reference.

Moreover, a series of processing which has been described in the above embodiments and the like can be executed by either hardware or software. When a series of processing is executed by the software, a program composing the software is installed in a general-purpose computer or the like. Such a program may be recorded in a recording medium in advance which is built in the computer.

The present application contains subject matter related to that disclosed in Japanese Priority Patent Application JP 2009-138427 filed with the Japan Patent Office on June 9, 2009.

It should be understood by those skilled in the art that various modifications, combinations, sub-combinations and alterations may occur depending on design requirements and other factors insofar as they are within the scope of the appended claims or the equivalents thereof.

**Claims**

1. A display device, comprising:

means (3) for providing light;
means (2) for generating images on a screen by modulating light supplied from the means (3) for providing light, the images being generated by sequentially scanning in a screen scanning direction while alternately turning-ON and turning-OFF the light from the means for providing light, wherein the means (2) for generating images produces different gradations of luminance in the displayed image by implementing modulation amounts in accordance with driving by an applied video signal; and
video signal processing means (41) configured to supply to the image generating means (2), in use, a time division multiplexed video signal (D1) for generating target luminance values on the screen, the time division multiplexed video signal (D1) comprising time division multiplexed images from at least a first video signal (DL) and a second video signal (DR), wherein in the time division multiplexed video signal (D1) images from the first video signal (DL) are adjacent to respective images from the second video signal (DR) and are temporally alternated with each other;
wherein the video signal processing means (41) is configured to detect in the time division multiplexed video signal, along the screen scanning direction, amounts of parallax or difference in gradation between a first image from the first video signal (DL) and an adjacent image from the second video signal (DR), and to determine the loc0ation in the screen scanning direction, where the maximum amount of parallax or difference in gradation between said first image and adjacent image is detected by the video signal processing means; and
means (50) for controlling the turn-on time (Ton) of the supply of light to the means (2) for generating images from the means (3) for providing light, wherein the means for controlling (50) is configured to set the start (T2) of said turn-on time (Ton) to correspond to the point in time in the display period of said first image when said the location on the screen reaches the amount of modulation that produces, upon supply of light, the target luminance for said first image at said location.

2. A display device according to claim 1, wherein said means for providing light are:

> a backlight (3);
> said means for generating images are:

>> a display panel (2) for generating images by modulating light supplied from the backlight (3); and said means for controlling are:

>>> a backlight controlling portion (50) comprising means for variably controlling at least the start of the turn-on time of the backlight (3).

3. The display device as claimed in claim 2, wherein said means for variably controlling comprises means for switching the backlight (3) between a turn-ON period and a turn-OFF period and controlling the timing of the switching.

4. The display device as claimed in claim 2, wherein said means for variably controlling comprises means for switching the backlight (3) between a turn-ON period and a turn-OFF period and controlling the duty of the turn-ON period.

5. The display device as claimed in claim 1 or 2, wherein the video signal processing means (41) is configured to supply to the image generating means (2), in use, a time division multiplexed video signal comprising time division multiplexed images from respective video signals (V1,V2) adapted to be viewed by different users.

6. The display device as claimed in claim 1 or 2, wherein the video signal processing means (41) is configured to supply to the image generating means (2), in use, a time division multiplex of a first video signal (DL) comprising a sequence of left-hand side images and a second video signal (DR) comprising a sequence of right-hand side images, and said means for variably controlling is configured to set the start of the turn-on time in accordance with an amount of parallax between a left-hand side image and an adjacent right-hand side image.

7. The display device as claimed in claim 6, wherein the means for variably controlling (50) is configured to control the turn-on time in accordance with a profile of an amount of parallax detected along a screen scanning direction so that when the position where the maximum value is obtained in the profile of an amount of parallax is closer to the scanning start position than to the central portion of the screen, the start of the turn-on time is changed so as to become earlier.

8. The display device as claimed in claim 1 or 2, wherein the video signal processing means (41) is configured to supply to the image generating means (2), in use, a time division multiplex of a first video signal (DL) comprising a sequence of left-hand side images and a second video signal comprising a sequence of right-hand side images, and said means for variably controlling (50) is configured to set the start of the turn-on time in accordance with an amount of contrast between a left-hand side image and an adjacent right-hand side image.

9. The display device as claimed in claim 8, wherein the means for variably controlling (50) is configured to control the turn-on time in accordance with a profile of an amount of difference in gradation detected along a screen scanning direction so that when the position where the maximum value is obtained in the profile of the difference in gradation is closer to the scanning start position than to the central portion of the screen, the start of the turn-on time is changed so as to become earlier.

10. The display device as claimed in claim 1 or 2, wherein the video signal processing means (41) is configured to supply to the image generating means (2), in use, a time division multiplex of a first video signal comprising a sequence of left-hand side images and a second video signal comprising a sequence of right-hand side images, and said means for variably controlling (50) is further configured to set the ON-period, of the supply of light to the means (2) for generating images from the means (3) for providing light, in accordance with the amount of parallax between said left-hand side image and adjacent right-hand side image.

11. The display device as claimed in claim 1 or 2, wherein the video signal processing means (41) is configured to supply to the image generating means (2), in use, a time division multiplex of a first video signal comprising a sequence of left-hand side images and a second video signal comprising a sequence of right-hand side images, and the means for variably controlling (50) is further configured to set the ON-period, of the supply of light to the means (2) for generating images from the means (3) for providing light, in accordance with the amount of difference in gradation between said left-hand side image and adjacent right-hand side image.

12. The display device as claimed in claim 1 or 2, wherein:

the video signal processing means (41) is configured to determine whether or not the difference in gradation between said first image from the first video signal (DL) and said adjacent image from the second video signal (DR) is uniform for the entire screen, and

the means for controlling (50) is configured:

when the video signal processing means (41) determines that said difference in gradation is not uniform for the entire screen, to set the start of said turn-on time (Ton) to correspond to the point in time in the display period of said first image when the first location on the screen reaches an amount of modulation that produces, upon supply of light, the target luminance for said first image at said first location and the first location is a location in the screen scanning direction where the maximal amount of difference in gradation between said first image and adjacent image is detected by the video signal processing means (41), and

when the video signal processing means (41) determines that said difference in gradation is uniform for the entire screen, to set the ON-period, of the supply of light to the means (2) for generating images from the means (3) for providing light, in accordance with said amount of difference in gradation.

13. The display device as claimed in claim 1 or 2, wherein said means for variably controlling (50) comprises means for variably controlling at least one of the start of the turn-on time or the ON-period, of the supply of light to the means (2) for generating images from the means (3) for providing light, in accordance with a signal received from a source external to the display device (1).

14. A display method, comprising:

providing light;

generating images on a screen by modulating the provided light to produce different gradations of luminance in the displayed image by implementing modulation amounts according to a time division multiplexed video signal (D1) for generating target luminance values on the screen, the time divisional multiplexed video signal (D1) comprising time division multiplexed images from at least a first video signal (DL) and a second video signal (DR), wherein in the time division multiplexed video signal images from the first video signal (DL) are adjacent to respective images from the second video signal (DR) and are temporally alternated with each other, the images being generated by sequentially scanning in a screen scanning direction while alternately turning-ON and turning-OFF the provided light;

detecting in the time division multiplexed video signal (D1), along the screen scanning direction, amounts of parallax or difference in gradation between a first image from the first video signal (DL) and an adjacent image from the second video signal (DR), and determining the location in the screen scanning direction where the maximal amount of parallax or difference in gradation between said first image and adjacent image is detected in the detecting; and

controlling the turn-on time (Ton) of the provided light to set the start time (T2) of said turn-on time (Ton) to correspond to the point in time in the display period of said first image when said location on the screen reaches the amount of modulation that produces, upon supply of light, the target luminance for said first image at said location.

15. A display device, comprising:

means (3) for providing light;

means (2) for generating images on a screen by modulating light supplied from the means (3) for providing light, the images being generated by sequentially scanning in a screen scanning direction, wherein the means (2) for generating images produces different gradations of luminance in the displayed image by implementing modulation amounts in accordance with driving by an applied video signal; and

video signal processing means (41) configured to supply to the image generating means (2), in use, a time division multiplexed video signal (D1) for generating target luminance values on the screen, the time division multiplexed video signal (D1) comprising time division multiplexed images from at least a first video signal (DL) and a second video signal (DR), wherein in the time division multiplexed video signal (D1) images from the first video signal (DL) are adjacent to respective images from the second video signal (DR) and are temporally alternated with each other;

wherein the video signal processing means (41) is configured to detect in the time division multiplexed video signal, along the screen scanning direction, amounts of parallax or difference in gradation between a first image from the first video signal (DL) and an adjacent image from the second video signal (DR), and to determine a location in the screen scanning direction where the maximum amount of parallax or difference in gradation between said first image and adjacent image is detected by the video signal processing means; and

means (42) for generating a signal controlling the opening time of shutter means controlling viewability of the images by a user, wherein the shutter control signal generating means (42) is configured to set the start of said opening time to correspond to the point of time in the display period of said first image when said location on the screen reaches the amount of modulation that produces the target luminance for said first image at said location.

**Patentansprüche**

1. Anzeigevorrichtung, umfassend:

Mittel (3) zum Bereitstellen von Licht,

Mittel (2) zum Erzeugen von Bildern auf einem Bildschirm, durch Modulieren von Licht, das von den Mitteln (3) zum Bereitstellen von Licht zugeführt wird, wobei die Bilder durch aufeinanderfolgendes Abtasten in einer Bildschirmabtastrichtung während eines abwechselnden EIN-Schaltens und AUS-Schaltens des Lichts von den Mitteln zum Bereitstellen von Licht erzeugt werden, wobei die Mittel (2) zum Erzeugen der Bilder verschiedene Abstufungen an Leuchtkraft im angezeigten Bild durch ein Implementieren von Modulationsmengen in Übereinstimmung mit einem Antreiben durch ein angelegtes Videosignal produzieren, und

Videosignalverarbeitungsmittel (41), die konfiguriert sind, den Bilderzeugungsmitteln (2) in Verwendung ein Zeitmultiplexvideosignal (D1) zum Erzeugen von Zielleuchtkraftwerten auf dem Bildschirm zuzuleiten, wobei das Zeitmultiplexvideosignal (D1) Zeitmultiplexbilder von zumindest einem ersten Videosignal (DL) und einem zweiten Videosignal (DR) umfasst, wobei im Zeitmultiplexvideosignal (D1) Bilder vom ersten Videosignal (DL) an jeweilige Bilder vom zweiten Videosignal (DR) aneinander angrenzen und zeitlich zueinander verschoben sind,

wobei die Videosignalverarbeitungsmittel (41) konfiguriert sind, im Zeitmultiplexvideosignal entlang der Bildschirmabtastrichtung ein Ausmaß einer Parallaxe oder eines Unterschieds in einer Abstufung zwischen einem ersten Bild vom ersten Videosignal (DL) und einem angrenzenden Bild vom zweiten Videosignal (DR) zu erfassen und die Stelle in der Bildschirmabtastrichtung zu ermitteln, wo das maximale Ausmaß an Parallaxe oder Unterschied in der Abstufung zwischen dem ersten Bild und dem angrenzenden Bild durch die Videosignalverarbeitungsmittel erfasst ist, und

Mittel (50) zum Steuern der Einschaltzeit (Ton) der Lichtzuleitung an die Mittel (2) zum Erzeugen von Bildern von den Mitteln (3) zum Bereitstellen von Licht, wobei die Mittel zum Steuern (50) konfiguriert sind, den Beginn (T2) der Einschaltzeit (Ton) so einzustellen, dass er dem Zeitpunkt in der Anzeigedauer des ersten Bilds entspricht, zu dem die Stelle am Bildschirm das Ausmaß an Modulation erreicht, das bei Lichtzuleitung die Zielleuchtkraft für das erste Bild an der Stelle produziert.

2. Anzeigevorrichtung nach Anspruch 1, wobei die Mittel zum Bereitstellen von Licht sind:

ein Hintergrundlicht (3),
die Mittel zum Erzeugen von Bildern sind:

ein Anzeigepanel (2) zum Erzeugen von Bildern durch Modulieren von Licht, das vom Hintergrundlicht (3) zugeleitet wird, und
die Mittel zum Steuern sind:

ein Hintergrundlichtsteuerabschnitt (50), der Mittel zum variablen Steuern zumindest des Beginns der Einschaltzeit des Hintergrundlichts (3) umfasst.

3. Anzeigevorrichtung nach Anspruch 2, wobei die Mittel zum variablen Steuern Mittel zum Umschalten des Hintergrundlichts (3) zwischen einer EIN-Schaltdauer und einer AUS-Schaltdauer und zum Steuern des Zeitablaufs des Umschaltens umfassen.

4. Anzeigevorrichtung nach Anspruch 2, wobei die Mittel zum variablen Steuern Mittel zum Umschalten des Hintergrundlichts (3) zwischen einer EIN-Schaltdauer und einer AUS-Schaltdauer und zum Steuern des Tastverhältnisses der EIN-Schaltdauer umfassen.

5. Anzeigevorrichtung nach Anspruch 1 oder 2, wobei die Videosignalverarbeitungsmittel (41) konfiguriert sind, den Bilderzeugungsmitteln (2) in Verwendung ein Zeitmultiplexvideosignal zuzuleiten, das Zeitmultiplexbilder von jeweiligen Videosignalen (V1, V2) umfasst, die angepasst sind, von verschiedenen Anwendern angesehen zu werden.

6. Anzeigevorrichtung nach Anspruch 1 oder 2, wobei die Videosignalverarbeitungsmittel (41) konfiguriert sind, den Bilderzeugungsmitteln (2) in Verwendung ein Zeitmultiplex eines ersten Videosignals (DL), umfassend eine Abfolge von linken Bildern, und ein zweites Videosignal (DR), umfassend eine Abfolge von rechten Bildern, zuzuleiten, und die Mittel zum variablen Steuern konfiguriert sind, den Beginn der Einschaltzeit in Übereinstimmung mit einem Ausmaß an Parallaxe zwischen einem linken Bild und einem angrenzenden rechten Bild einzustellen.

7. Anzeigevorrichtung nach Anspruch 6, wobei die Mittel zum variablen Steuern (50) konfiguriert sind, die Einschaltzeit in Übereinstimmung mit einem Profil eines Ausmaßes an Parallaxe, die entlang einer Bildschirmabtastrichtung erfasst wird, zu steuern, sodass, wenn die Position, wo der maximale Wert im Profil eines Ausmaßes an Parallaxe erhalten wird, näher bei der Abtastanfangsposition als bei der Mittelposition des Bildschirms ist, der Beginn der Einschaltzeit geändert wird, um früher zu sein.

8. Anzeigevorrichtung nach Anspruch 1 oder 2, wobei die Videosignalverarbeitungsmittel (41) konfiguriert sind, den Bilderzeugungsmitteln (2) in Verwendung ein Zeitmultiplex eines ersten Videosignals (DL), umfassend eine Abfolge von linken Bildern, und ein zweites Videosignal, umfassend eine Abfolge von rechten Bildern, zuzuleiten, und die Mittel zum variablen Steuern (50) konfiguriert sind, den Beginn der Einschaltzeit in Übereinstimmung mit einem Ausmaß an Kontrast zwischen einem linken Bild und einem angrenzenden rechten Bild einzustellen.

9. Anzeigevorrichtung nach Anspruch 8, wobei die Mittel zum variablen Steuern (50) konfiguriert sind, die Einschaltzeit in Übereinstimmung mit einem Profil eines Ausmaßes an Unterschied in einer Abstufung, der entlang einer Bildschirmabtastrichtung erfasst wird, zu steuern, sodass, wenn die Position, wo der maximale Wert im Profil des Unterschieds in der Abstufung erhalten wird, näher bei der Abtastanfangsposition beim Mittelabschnitt des Bildschirms ist, der Beginn der Einschaltzeit geändert wird, um früher zu sein.

10. Anzeigevorrichtung nach Anspruch 1 oder 2, wobei die Videosignalverarbeitungsmittel (41) konfiguriert sind, den Bilderzeugungsmitteln (2) in Verwendung ein Zeitmultiplex eines ersten Videosignals, umfassend eine Abfolge von linken Bildern, und ein zweites Videosignal, umfassend eine Abfolge von rechten Bildern, zuzuleiten, und die Mittel zum variablen Steuern (50) ferner konfiguriert sind, die EIN-Zeitdauer der Zuleitung von Licht von den Mitteln (3) zum Bereitstellen von Licht zu den Mitteln (2) zum Erzeugen von Bildern in Übereinstimmung mit der Ausmaß an Parallaxe zwischen dem linken Bild und angrenzenden rechten Bild einzustellen.

11. Anzeigevorrichtung nach Anspruch 1 oder 2, wobei die Videosignalverarbeitungsmittel (41) konfiguriert sind, den Bilderzeugungsmitteln (2) in Verwendung ein Zeitmultiplex eines ersten Videosignals, umfassend eine Abfolge von linken Bildern, und ein zweites Videosignal, umfassend eine Abfolge von rechten Bildern, zuzuleiten, und die Mittel zum variablen Steuern (50) ferner konfiguriert sind, die EIN-Zeitdauer der Zuleitung von Licht von den Mitteln (3) zum Bereitstellen von Licht zu den Mitteln (2) zum Erzeugen von Bildern in Übereinstimmung mit dem Ausmaß an Unterschied zwischen dem linken Bild und angrenzenden rechten Bild einzustellen.

12. Anzeigevorrichtung nach Anspruch 1 oder 2, wobei:

die Videosignalverarbeitungsmittel (41) konfiguriert sind, zu ermitteln, ob der Unterschied in der Abstufung zwischen dem ersten Bild vom ersten Videosignal (DL) und dem angrenzenden Bild vom zweiten Videosignal (DR) für den gesamten Bildschirm einheitlich ist oder nicht, und die Mittel zum Steuern (50) konfiguriert sind:

wenn die Videosignalverarbeitungsmittel (41) ermitteln, dass der Unterschied in der Abstufung nicht für den gesamten Bildschirm einheitlich ist, den Beginn der Einschaltzeit (Ton) so einzustellen, dass er dem Zeitpunkt in der Anzeigedauer des ersten Bilds entspricht, zu dem die erste Stelle am Bildschirm ein Ausmaß

17

an Modulation erreicht, die bei Lichtzuleitung die Zielleuchtkraft für das erste Bild an der ersten Stelle erreicht, und die erste Stelle eine Stelle in der Bildschirmabtastrichtung ist, wo das maximale Ausmaß an Unterschied in der Abstufung zwischen dem ersten Bild und angrenzenden Bild durch das Videosignalverarbeitungsmittel (41) erfasst wird, und

wenn die Videosignalverarbeitungsmittel (41) ermitteln, dass der Unterschied in der Abstufung für den gesamten Bildschirm einheitlich ist, die EIN-Zeitdauer der Lichtzuleitung vom Mittel (3) zum Bereitstellen von Licht zum Mittel (2) zum Erzeugen von Bildern in Übereinstimmung mit dem Ausmaß an Unterschied in der Abstufung einzustellen.

**13.** Anzeigevorrichtung nach Anspruch 1 oder 2, wobei die Mittel zum variablen Steuern (50) Mittel zum variablen Steuern zumindest eines des Beginns der Einschaltzeit oder der EIN-Zeitdauer der Lichtzuleitung von den Mitteln (3) zum Bereitstellen von Licht zu den Mitteln (2) zum Erzeugen von Bildern in Übereinstimmung mit einem Signal, das von einer Quelle außerhalb der Anzeigevorrichtung (1) empfangen wird, umfassen.

**14.** Anzeigeverfahren, umfassend:

Bereitstellen von Licht,
Erzeugen von Bildern auf einem Bildschirm, durch Modulieren des bereitgestellten Lichts, um verschiedene Abstufungen an Leuchtkraft im angezeigten Bild zu erzeugen, durch Implementieren eines Modulationsausmaßes gemäß einem Zeitmultiplexvideosignal (D1) zum Erzeugen von Zielleuchtkraftwerten auf dem Bildschirm, wobei das Zeitmultiplexvideosignal (D1) Zeitmultiplexbilder von zumindest einem ersten Videosignal (DL) und einem zweiten Videosignal (DR) umfasst, wobei im Zeitmultiplexvideosignal Bilder vom ersten Videosignal (DL) an jeweilige Bilder vom zweiten Videosignal (DR) angrenzen und zeitlich zueinander verschoben sind, wobei die Bilder durch aufeinanderfolgendes Abtasten in einer Bildschirmabtastrichtung während eines abwechselnde EIN-Schaltens und AUS-Schaltens des bereitgestellten Lichts erzeugt werden,
Erfassen im Multiplexvideosignal (D1) entlang der Bildschirmabtastrichtung eines Ausmaßes an Parallaxe oder Unterschied in einer Abstufung zwischen einem ersten Bild vom ersten Videosignal (DL) und einem angrenzenden Bild vom zweiten Videosignal (DR) und Ermitteln der Stelle in der Bildschirmabtastrichtung, wo das maximale Ausmaß an Parallaxe oder Unterschied in der Abstufung zwischen dem ersten Bild und angrenzenden Bild beim Erfassen erfasst wird, und
Steuern der Einschaltzeit (Ton) des bereitgestellten Lichts, um die Anfangszeit (T2) der Einschaltzeit (Ton) so einzustellen, dass sie dem Zeitpunkt des ersten Bilds entspricht, zu dem die Stelle am Bildschirm das Ausmaß an Modulation erreicht, das bei Lichtzuleitung die Zielleuchtkraft für das erste Bild an der Stelle produziert.

**15.** Anzeigevorrichtung, umfassend:

Mittel (3) zum Bereitstellen von Licht,
Mittel (2) zum Erzeugen von Bildern auf einem Bildschirm durch Modulieren von Licht, das von den Mitteln (3) zum Bereitstellen von Licht zugeführt wird, wobei die Bilder durch aufeinanderfolgendes Abtasten in einer Bildschirmabtastrichtung erzeugt werden, wobei die Mittel (2) zum Erzeugen von Bildern durch Implementieren eines Modulationsausmaßes in Übereinstimmung mit dem Antreiben durch ein angelegtes Videosignal verschiedene Abstufungen an Leuchtkraft im angezeigten Bild produziert, und
Videosignalverarbeitungsmittel (41), die konfiguriert sind, den Bilderzeugungsmitteln (2) in Verwendung ein Zeitmultiplexvideosignal (D1) zum Erzeugen von Zielleuchtkraftwerten auf dem Bildschirm zuzuleiten, wobei das Zeitmultiplexvideosignal (D1) Zeitmultiplexbilder von zumindest einem ersten Videosignal (DL) und einem zweiten Videosignal (DR) umfasst, wobei im Multiplexvideosignal (D1) Bilder vom ersten Videosignal (DL) an jeweilige Bilder vom zweiten Videosignal (DR) angrenzen und zeitlich zueinander verschoben sind,
wobei die Videosignalverarbeitungsmittel (41) konfiguriert sind, im Zeitmultiplexvideosignal entlang der Bildschirmabtastrichtung ein Ausmaß an Parallaxe oder Unterschied in einer Abstufung zwischen einem ersten Bild vom ersten Videosignal (DL) und einem angrenzen Bild vom zweiten Videosignal (DR) zu erfassen und eine Stelle in der Bildschirmabtastrichtung zu ermitteln, wo das maximale Ausmaß an Parallaxe oder Unterschied in der Abstufung zwischen dem ersten Bild und angrenzenden Bild durch das Videosignalverarbeitungsmittel erfasst wird, und
Mittel (42) zum Erzeugen eines Signals, das die Öffnungszeit eines Verschlussmittels steuert, das eine Sichtbarkeit des Bilds für einen Anwender steuert, wobei die Verschlusssteuersignalerzeugungsmittel (42) konfiguriert sind, den Beginn der Öffnungszeit so einzustellen, dass er dem Zeitpunkt in der Anzeigedauer des ersten Bilds entspricht, zu dem die Stelle des Bildschirms das Ausmaß an Modulation erreicht, das die Zielleuchtkraft für das erste Bild an der Stelle erzeugt.

**Revendications**

1. Dispositif d'affichage, comprenant :

   des moyens (3) pour fournir de la lumière ;
   des moyens (2) pour générer des images sur un écran en modulant la lumière fournie par les moyens (3) pour fournir de la lumière, les images étant générées en balayant séquentiellement dans une direction de balayage d'écran tout en activant et désactivant alternativement la lumière provenant des moyens pour fournir de la lumière, dans lequel les moyens (2) pour générer des images produisent différentes gradations de luminance dans l'image affichée en mettant en oeuvre des quantités de modulation conformément à une commande par un signal vidéo appliqué ; et
   des moyens de traitement de signal vidéo (41) configurés pour fournir aux moyens de génération d'image (2), en utilisation, un signal vidéo multiplexé par répartition dans le temps (D1) pour générer des valeurs de luminance cibles sur l'écran, le signal vidéo multiplexé par répartition dans le temps (D1) comprenant des images multiplexées par répartition dans le temps provenant d'au moins un premier signal vidéo (DL) et un deuxième signal vidéo (DR), dans lequel, dans le signal vidéo multiplexé par répartition dans le temps (D1), les images provenant du premier signal vidéo (DL) sont adjacentes aux images respectives provenant du deuxième signal vidéo (DR) et sont alternées temporellement les unes avec les autres ;
   dans lequel les moyens de traitement de signal vidéo (41) sont configurés pour détecter dans le signal vidéo multiplexé par répartition dans le temps, le long de la direction de balayage d'écran, les quantités de parallaxe ou de différence de gradation entre une première image provenant du premier signal vidéo (DL) et une image adjacente provenant du deuxième signal vidéo (DR), et pour déterminer l'emplacement, dans la direction de balayage d'écran, où la quantité maximum de parallaxe ou de différence de gradation entre ladite première image et l'image adjacente est détectée par les moyens de traitement de signal vidéo ; et
   des moyens (50) pour commander le temps d'activation (Ton) de la fourniture de lumière aux moyens (2) pour générer des images à partir des moyens (3) pour fournir de la lumière, dans lequel les moyens pour commander (50) sont configurés pour établir le début (T2) dudit temps d'activation (Ton) pour qu'il corresponde à l'instant dans la période d'affichage de ladite première image auquel ledit emplacement sur l'écran atteint la quantité de modulation qui produit, lors de la fourniture de lumière, la luminance cible pour ladite première image au niveau dudit emplacement.

2. Dispositif d'affichage selon la revendication 1, dans lequel
   lesdits moyens pour fournir de la lumière sont :

   un rétroéclairage (3) ;
   lesdits moyens pour générer des images sont :

      un panneau d'affichage (2) pour générer des images en modulant la lumière fournie par le rétroéclairage (3) ; et
      lesdits moyens pour commander sont :

         une partie de commande de rétroéclairage (50) comprenant des moyens pour commander de manière variable au moins le début du temps d'activation du rétroéclairage (3).

3. Dispositif d'affichage selon la revendication 2, dans lequel lesdits moyens pour commander de manière variable comprennent des moyens pour commuter le rétroéclairage (3) entre une période d'activation et une période de désactivation et commander la synchronisation de la commutation.

4. Dispositif d'affichage selon la revendication 2, dans lequel lesdits moyens pour commander de manière variable comprennent des moyens pour commuter le rétroéclairage (3) entre une période d'activation et une période de désactivation et commander le rapport cyclique de la période d'activation.

5. Dispositif d'affichage selon la revendication 1 ou 2, dans lequel les moyens de traitement de signal vidéo (41) sont configurés pour fournir aux moyens de génération d'image (2), en utilisation, un signal vidéo multiplexé par répartition dans le temps comprenant des images multiplexées par répartition dans le temps provenant de signaux vidéo (V1, V2) respectifs conçues pour être vues par différents utilisateurs.

6. Dispositif d'affichage selon la revendication 1 ou 2, dans lequel les moyens de traitement de signal vidéo (41) sont configurés pour fournir aux moyens de génération d'image (2), en utilisation, un multiplexage par répartition dans le temps d'un premier signal vidéo (DL) comprenant une séquence d'images de côté gauche et d'un deuxième signal vidéo (DR) comprenant une séquence d'images de côté droit, et lesdits moyens pour commander de manière variable sont configurés pour établir le début du temps d'activation conformément à une quantité de parallaxe entre une image de côté gauche et une image de côté droit adjacente.

7. Dispositif d'affichage selon la revendication 6, dans lequel les moyens pour commander de manière variable (50) sont configurés pour commander le temps d'activation conformément à un profil d'une quantité de parallaxe détectée le long d'une direction de balayage d'écran de sorte que, lorsque la position où la valeur maximum est obtenue dans le profil d'une quantité de parallaxe est plus proche de la position de début de balayage que de la partie centrale de l'écran, le début du temps d'activation soit changé de manière à être avancé.

8. Dispositif d'affichage selon la revendication 1 ou 2, dans lequel les moyens de traitement de signal vidéo (41) sont configurés pour fournir aux moyens de génération d'image (2), en utilisation, un multiplexage par répartition dans le temps d'un premier signal vidéo (DL) comprenant une séquence d'images de côté gauche et d'un deuxième signal vidéo comprenant une séquence d'images de côté droit, et lesdits moyens pour commander de manière variable (50) sont configurés pour établir le début du temps d'activation conformément à une quantité de contraste entre une image de côté gauche et une image de côté droit adjacente.

9. Dispositif d'affichage selon la revendication 8, dans lequel les moyens pour commander de manière variable (50) sont configurés pour commander le temps d'activation conformément à un profil d'une quantité de différence de gradation détectée le long d'une direction de balayage d'écran de sorte que, lorsque la position où la valeur maximum est obtenue dans le profil de la différence de gradation est plus proche de la position de début de balayage que de la partie centrale de l'écran, le début du temps d'activation soit changé de manière à être avancé.

10. Dispositif d'affichage selon la revendication 1 ou 2, dans lequel les moyens de traitement de signal vidéo (41) sont configurés pour fournir aux moyens de génération d'image (2), en utilisation, un multiplexage par répartition dans le temps d'un premier signal vidéo comprenant une séquence d'images de côté gauche et d'un deuxième signal vidéo comprenant une séquence d'images de côté droit, et lesdits moyens pour commander de manière variable (50) sont en outre configurés pour établir la période d'activation de la fourniture de lumière aux moyens (2) pour générer des images à partir des moyens (3) pour fournir de la lumière, conformément à la quantité de parallaxe entre ladite image de côté gauche et l'image de côté droit adjacente.

11. Dispositif d'affichage selon la revendication 1 ou 2, dans lequel les moyens de traitement de signal vidéo (41) sont configurés pour fournir aux moyens de génération d'image (2), en utilisation, un multiplexage par répartition dans le temps d'un premier signal vidéo comprenant une séquence d'images de côté gauche et d'un deuxième signal vidéo comprenant une séquence d'images de côté droit, et les moyens pour commander de manière variable (50) sont en outre configurés pour établir la période d'activation de la fourniture de lumière aux moyens (2) pour générer des images à partir des moyens (3) pour fournir de la lumière, conformément à la quantité de différence de gradation entre ladite image de côté gauche et l'image de côté droit adjacente.

12. Dispositif d'affichage selon la revendication 1 ou 2, dans lequel :

les moyens de traitement de signal vidéo (41) sont configurés pour déterminer si, oui ou non, la différence de gradation entre ladite première image provenant du premier signal vidéo (DL) et ladite image adjacente provenant du deuxième signal vidéo (DR) est uniforme pour l'écran entier, et
les moyens pour commander (50) sont configurés :

lorsque les moyens de traitement de signal vidéo (41) déterminent que ladite différence de gradation n'est pas uniforme pour l'écran entier, pour établir le début dudit temps d'activation (Ton) pour qu'il corresponde à l'instant dans la période d'affichage de ladite première image lorsque le premier emplacement sur l'écran atteint une quantité de modulation qui produit, lors de la fourniture de lumière, la luminance cible pour ladite première image au niveau dudit premier emplacement et le premier emplacement est un emplacement dans la direction de balayage d'écran où la quantité maximum de différence de gradation entre ladite première image et l'image adjacente est détectée par les moyens de traitement de signal vidéo (41), et
lorsque les moyens de traitement de signal vidéo (41) déterminent que ladite différence de gradation est uniforme pour l'écran entier, pour établir la période d'activation de la fourniture de lumière aux moyens (2) pour générer des images à partir des moyens (3) pour fournir de la lumière, conformément à ladite quantité de différence de gradation.

**13.** Dispositif d'affichage selon la revendication 1 ou 2, dans lequel lesdits moyens pour commander de manière variable (50) comprennent des moyens pour commander de manière variable au moins l'un du début du temps d'activation ou de la période d'activation de la fourniture de lumière aux moyens (2) pour générer des images à partir des moyens (3) pour fournir de la lumière, conformément à un signal reçu d'une source à l'extérieur du dispositif d'affichage (1).

**14.** Procédé d'affichage, comprenant :

la fourniture de lumière ;
la génération d'images sur un écran en modulant la lumière fournie pour produire différentes gradations de luminance dans l'image affichée en mettant en oeuvre des quantités de modulation conformément à un signal vidéo multiplexé par répartition dans le temps (D1) pour générer des valeurs de luminance cibles sur l'écran, le signal vidéo multiplexé par répartition dans le temps (D1) comprenant des images multiplexées par répartition dans le temps provenant d'au moins un premier signal vidéo (DL) et un deuxième signal vidéo (DR), dans lequel, dans le signal vidéo multiplexé par répartition dans le temps, les images provenant du premier signal vidéo (DL) sont adjacentes aux images respectives provenant du deuxième signal vidéo (DR) et sont alternées temporellement les unes avec les autres, les images étant générées en balayant séquentiellement dans une direction de balayage d'écran tout en activant et désactivant alternativement la lumière fournie ;
la détection dans le signal vidéo multiplexé par répartition dans le temps (D1), le long de la direction de balayage d'écran, des quantités de parallaxe ou de différence de gradation entre une première image provenant du premier signal vidéo (DL) et une image adjacente provenant du deuxième signal vidéo (DR), et la détermination de l'emplacement dans la direction de balayage d'écran où la quantité maximum de parallaxe ou de différence de gradation entre ladite première image et l'image adjacente est détectée lors de la détection ; et
la commande du temps d'activation (Ton) de la lumière fournie pour établir l'instant de début (T2) dudit temps d'activation (Ton) pour qu'il corresponde à l'instant dans la période d'affichage de ladite première image auquel ledit emplacement sur l'écran atteint la quantité de modulation qui produit, lors de la fourniture de lumière, la luminance cible pour ladite première image au niveau dudit emplacement.

**15.** Dispositif d'affichage, comprenant :

des moyens (3) pour fournir de la lumière ;
des moyens (2) pour générer des images sur un écran en modulant la lumière fournie par les moyens (3) pour fournir de la lumière, les images étant générées en balayant séquentiellement dans une direction de balayage d'écran, dans lequel les moyens (2) pour générer des images produisent différentes gradations de luminance dans l'image affichée en mettant en oeuvre des quantités de modulation conformément à une commande par un signal vidéo appliqué ; et
des moyens de traitement de signal vidéo (41) configurés pour fournir aux moyens de génération d'image (2), en utilisation, un signal vidéo multiplexé par répartition dans le temps (D1) pour générer des valeurs de luminance cibles sur l'écran, le signal vidéo multiplexé par répartition dans le temps (D1) comprenant des images multiplexées par répartition dans le temps provenant d'au moins un premier signal vidéo (DL) et un deuxième signal vidéo (DR), dans lequel, dans le signal vidéo multiplexé par répartition dans le temps (D1), les images provenant du premier signal vidéo (DL) sont adjacentes aux images respectives provenant du deuxième signal vidéo (DR) et sont alternées temporellement les unes avec les autres ;
dans lequel les moyens de traitement de signal vidéo (41) sont configurés pour détecter dans le signal vidéo multiplexé par répartition dans le temps, le long de la direction de balayage d'écran, les quantités de parallaxe ou de différence de gradation entre une première image provenant du premier signal vidéo (DL) et une image adjacente provenant du deuxième signal vidéo (DR), et pour déterminer un emplacement dans la direction de balayage d'écran où la quantité maximum de parallaxe ou de différence de gradation entre ladite première image et l'image adjacente est détectée par les moyens de traitement de signal vidéo ; et
des moyens (42) pour générer un signal commandant le temps d'ouverture de moyens formant obturateur commandant la visibilité des images par un utilisateur, dans lequel les moyens de génération de signal de commande d'obturateur (42) sont configurés pour établir le début dudit temps d'ouverture pour qu'il corresponde à l'instant dans la période d'affichage de ladite première image auquel ledit emplacement sur l'écran atteint la quantité de modulation qui produit la luminance cible pour ladite première image au niveau dudit emplacement.

# FIG.1

EP 2 262 272 B1

# FIG.2

# FIG.3A

# FIG.3B

# FIG.4A
UPPER PORTION
OF SCREEN

# FIG.4B
CENTRAL PORTION
OF SCREEN

# FIG.4C
LOWER PORTION
OF SCREEN

# FIG.5A

# FIG.5B

(P1L,P1R)
P1

VALUE OF INTEGRAL OF
AMOUNT OF PARALLAX

A

SCANNING
DIRECTION

P2
(P2L,P2R)

BEFORE CHANGE OF TIMING

FIG.6A
UPPER PORTION
OF SCREEN

FIG.6B
CENTRAL PORTION
OF SCREEN

FIG.6C
LOWER PORTION
OF SCREEN

AFTER CHANGE OF TIMING

Ton(R)  Ton(L)  Ton(R)  Ton(L)

Toff  |  | Toff |  | Toff |  | Toff |  | Toff

# FIG.7A

UPPER PORTION
OF SCREEN

# FIG.7B

CENTRAL PORTION
OF SCREEN

# FIG.7C

LOWER PORTION
OF SCREEN

LUMINANCE RATIO (%)

t2(R)  t2(L)  t2(R)  t2(L)  TIME

BEFORE CHANGE OF Duty

FIG.8A
UPPER PORTION
OF SCREEN

FIG.8B
CENTRAL PORTION
OF SCREEN

FIG.8C
LOWER PORTION
OF SCREEN

AFTER CHANGE OF Duty

# FIG.9A

UPPER PORTION
OF SCREEN

# FIG.9B

CENTRAL PORTION
OF SCREEN

# FIG.9C

LOWER PORTION
OF SCREEN

Ton(R)  Ton(L)  Ton(R)  Ton(L)

Toff | Toff | Toff | Toff | Toff

LUMINANCE RATIO (%)

100

50

0

100

50

0

100

50

0

Duty2(R)  Duty2(L)  Duty2(R)  Duty2(L)

TIME

# FIG.10A

IMAGE FOR RIGHT-HAND EYE

# FIG.10B

IMAGE FOR LEFT-HAND EYE

# FIG.11A

# FIG.11B

**EP 2 262 272 B1**

**Patent documents cited in the description**

- JP 2000004451 A
- US 2009122087 A
- US 2005259064 A
- WO 2007072598 A
- WO 2006123706 A
- JP 2009138427 A